# EUROPEAN PATENT SPECIFICATION

(11) **EP 4 460 176 B1**
(45) Date of publication and mention of the grant of the patent: **16.07.2025**
(21) Application number: 22835675.4
(22) Date of filing: 12.12.2022
(51) Int. Cl.: A62C 3/00, A62C 37/11, A62C 37/38, A01K 1/00, A01K 7/06, A01K 29/00, A01K 39/02, A01K 45/00

(54) **LIQUID SUPPLY SYSTEM FOR A LIVESTOCK FARM**
FLÜSSIGKEITSVERSORGUNGSSYSTEM FÜR NUTZTIERBETRIEBE
SYSTÈME D'ALIMENTATION EN LIQUIDE POUR UNE FERME D'ÉLEVAGE

(30) Priority: 03.01.2022 EP 22150053
(43) Date of publication of application: 13.11.2024
(73) Proprietor: Signify Holding B.V., 5656 AE Eindhoven (NL)
(72) Inventor: BROERS, Harry, 5656 AE Eindhoven (NL); DE SAMBER, Marc, Andre, 5656 AE Eindhoven (NL)
(74) Representative: Verweij, Petronella Daniëlle
(86) International application number: PCT/EP2022/085371
(87) International publication number: WO 2023/126164

(56) References cited:
- CN-U- 214 178 555
- US-A1- 2011 202 186

## Description

### FIELD OF THE INVENTION

The present invention relates to the field of livestock farming, and in particular, to liquid supply systems for livestock farms.

### BACKGROUND OF THE INVENTION

With an ever-growing population, there is an increasing interest in industrial farms which are used to rear and raise livestock, such as poultry (e.g. chickens, ducks or turkeys), pigs, cattle, sheep and other farm animals. Typically, livestock are housed and fed in livestock stables.

These livestock stables have liquid (e.g. water) supply systems which are typically used for supplying liquid for consumption by the livestock.

CN214178555U discloses a system for providing drinking water and fire extinguishing functions in a pig stable.

More specifically, in livestock stables of industrial farms, drinking systems are used to provide fresh and clean drinking liquid (e.g. drinking water) to animals. Liquid is carried by a set of piping (or "watering lines"), to which drinking nipples are connected. As the livestock need refreshment/liquid, they will interact with the nipple and a drop of liquid will be released. For instance, if the livestock is formed of chickens, the chicken may peck a nipple, which causes the nipple to release water.

Some livestock stables, but not all, also include fire suppression circuits. These are important because industrial farms are very flammable, with research indicating that the chance of fire outbreak is twice as high as the chance of a house fire. This is because animals produce lots of combustible dust, such that the floor is often dusty as well as being often covered with organic material. Dust and the presence of gases (resulting from the organic material and the livestock themselves) increase the chance of an electrical short circuit and hence potential onset of fire.

Some fire suppression circuits include a network of piping filled with water under pressure, and individual sprinklers are placed along the piping to protect the areas beneath them. Because the water is always in the piping, fire sprinklers are always "on call." If fire breaks out, the air temperature above the fire rises and the sprinkler activates when the air temperature gets high enough. The sprinkler sprays water forcefully over the flames, extinguishing them completely in most cases, or at least controlling the heat and limiting the development of toxic smoke until the fire department arrives.

However, a significant number of industrial farms are not equipped with fire detection and suppression systems due to installation costs and complexity. There is therefore a strong desire to reduce the (material and monetary) cost of liquid supply systems that are capable of fire suppression.

There is also a desire to improve a reliability of fire suppression systems, as existing temperature responsive sprinklers are slow to respond to the presence of a fire, as they only activate if a certain temperature is reached at the sprinkler location. As such sprinklers are often positioned on a ceiling, there is a significant delay between fire at ground level, and sufficient temperature rise at a ceiling level.

### SUMMARY OF THE INVENTION

The invention is defined by the claims.

According to the invention defined in claim 1, there is provided a liquid supply system for a livestock stable. The liquid supply system comprises: a liquid drinking system comprising: a set of piping configured to carry liquid suitable for consumption by livestock; and one or more nipples connected to the set of piping and configured to release liquid, carried by the set of piping, for consumption by the livestock responsive to an interaction with the livestock; and a liquid spraying system comprising one or more sprinklers connected to the set of piping of the liquid drinking system and configured to controllably spray the liquid carried by the set of piping within the livestock stable, and wherein each of the one or more sprinklers is integrated into a respective nipple.

The present invention makes use of the same set of piping (and liquid) used for animal consumption to supply a liquid spraying system. Thus, rather than a separate liquid spraying system (such as a separate fire suppression system), a single set of piping is used to carry liquid for animal consumption and for spraying. This significantly reduces the amount of piping required to provide animal liquid feeding and sprinkling capability at a same time.

Moreover, as the same set of piping is used, liquid can be sprayed in close proximity to the livestock. Typically, livestock will congregate around liquid or food. This is particularly true if there is a fire, as livestock will retreat to a "safe space", which is usually the space at which they are fed and watered (i.e. supplied with liquid). Thus, using the same set of piping increases a likelihood that the livestock will be sprayed with the liquid, e.g. during a fire.

In the context of the present disclosure, a sprinkler is able to "controllably spray" when spraying only occurs when some predetermined criterion/criteria is/are met or a suitable control signal actively causes the sprinkler to spray liquid.

The liquid spraying system may further comprise: a fire sensor configured to detect the presence or absence of fire in the livestock stable; and a fire-responsive controller configured to control the one or more sprinklers to spray the liquid carried by the set of piping responsive to the fire sensor detecting the presence of fire in the livestock stable.

A fire sensor may be able to detect smoke or heat generated by a fire, and control the sprinkler(s) responsive to detected fire. In particular, the sprinkler(s) may be controlled to sprinkle liquid responsive to detection the presence of fire and be controlled to not sprinkle (i.e. be prevented from sprinkling) responsive to detection of the absence of fire.

The invention provides a mechanism by which fire suppression is integrated into the liquid supply system for watering the livestock. It increases the chances that the livestock will be sprinkled with liquid during a fire (due to the use of the same set of piping to supply the sprinkler(s) and the nipples around which livestock will congregate). By soaking the livestock during a fire, there is a reduced likelihood that the livestock will catch fire and/or will experience an increase in body temperature causing potential heat stress.

For example, the actuation of the local individual sprinklers can simply be based on a passive pressure-responsive element, such as e.g., a membrane that is disrupted when a certain higher pressure is reached. That higher pressure being imposed to the overall water line in case a fire onset is detected.

In some embodiments, the liquid spraying system further comprises: a heat sensor configured to detect a temperature in the livestock stable; and a heat-responsive controller configured to control the one or more sprinklers to spray the liquid carried by the set of piping responsive to the heat sensor detecting a temperature exceeding a predetermined temperature threshold.

This embodiment facilitates both fire suppression and treatment of heat stress in livestock. In particular, the predetermined temperature threshold may be selected so that, if temperature exceeds a value that would cause heat stress, then they can be sprayed with liquid to cool them down.

In some examples, the sprinkler(s) may be configured to operate in two spraying modes: a hard spraying mode with a larger water volume for fighting fire and a misting mode for wetting the animals and reducing the effects of heat stress (not related to a fire situation). Each mode may be associated with a different temperature threshold. The hard spraying mode may be activated responsive to the heat sensor detecting a temperature exceeding a first predetermined temperature threshold and the misting mode may be activated responsive to the heat sensor detecting a temperature exceeding a second predetermined temperature threshold, lower than the first predetermined temperature threshold.

In some examples, the liquid spraying system may comprise a heat stress sensor, configured to predict a measure of heat stress exhibited by livestock in the livestock stable; and a stress-responsive controller configured to control the one or more sprinklers to spray the liquid carried by the set of piping responsive to the heat stress sensor predicting that the measure of heat stress exceeds a predetermined heat stress threshold.

Suitable heat stress sensors include a temperature or heat sensor configured to directly monitor a temperature in the livestock stable, which directly indicates a probable level of heat stress.

Alternative heat stress sensors include cameras, audio or physiological sensors configured to monitor behavior, actions and/or vital signs of the livestock that are responsive to or indicate a level of heat stress. For instance, an increased respiration rate of livestock may indicate a higher level of heat stress (which can be monitored by any of the aforementioned sensors). As another example, gasping by the livestock represents a higher level of heat stress.

Yet another alternative heat stress sensor may include a liquid consumption sensor that monitors a liquid consumption by the livestock. Increased liquid consumption is indicative of increased levels of heat stress (as the livestock consumes more liquid to counteract the heat). Suitable liquid consumption sensors would be readily apparent to the person skilled in the art, e.g. to monitor a flow rate of liquid in the set of piping - which changes responsive to an amount of liquid consumed by the livestock.

In some examples, the liquid spraying system further comprises: a dust sensor configured to measure an amount of dust in the livestock stable; and a dust-responsive controller configured to control the one or more sprinklers to spray the liquid carried by the set of piping responsive to the dust sensor detecting an amount of dust exceeding a predetermined dust threshold.

It is also recognized that excessive dust may affect the wellbeing of livestock, e.g. causing respiration problems. By activating sprinklers responsive to dust exceeding a threshold, the amount of dust in the livestock stable can be reduced to improve the wellbeing of the livestock.

If the sprinklers are operable in an at least misting mode, then exceeding the predetermined dust threshold may trigger the sprinkler to enter the misting mode. Of course, if the sprinklers are also operable in a hard spraying mode, then the misting mode may be exited if a trigger for entering the hard spraying mode is met.

According to the invention, each of the one or more sprinklers is integrated into a respective nipple.

The nipples may be adapted to also be able to perform a sprinkling function. This approach is particularly beneficial for retrofitting existing liquid supply systems with new nipples that are able to act as a sprinkler as well, thereby reducing installation costs. This approach also ensures that sprinklers will be in the proximity of the livestock, as livestock congregate around nipples (especially during times of stress, such as fires or heat stress).

The combined sprinkler-nipple (being a nipple with an integrated sprinkler) is configured to be compatible with existing nipple connections for a liquid drinking system.

In some examples, each of the one or more sprinklers comprises: a first liquid release mechanism configured to release a first amount of liquid from the set of piping responsive to an interaction with livestock, so that each sprinkler is able to act as a nipple; and a second liquid release mechanism configured to controllably spray liquid from the set of piping.

Preferably, the second liquid release mechanism of each sprinkler is configured to spray liquid from the set of piping responsive to the liquid pressure in the set of piping exceeding a first predetermined pressure threshold.

In this way, the second liquid release mechanism may be passive, which significantly reduces a material cost and complexity of the nipples and the overall liquid supply system. In particular, controlling the pressure in a set of piping can be performed using pre-existing equipment and technologies, e.g. by appropriately controlling pumps that feed the set of piping, reducing a cost of installation and operation.

Optionally, the second liquid release mechanism comprises a spring-loaded valve.

A spring-loaded valve provides a simple mechanism for releasing liquid in a spray. In particular, a spring-loaded valve provides a passive spraying mechanism that can be operated by controlling the pressure of liquid in the connected set of piping.

A spring-loaded valve is also beneficial in that it can be reused multiple times (if the pressure is lowered, the valve closes and water spraying stops). An alternative to a spring-loaded valve is the use of a pressure-ruptured membrane, which would typically be single use.

In some examples, the second liquid release mechanism comprises a motorized valve responsive to communications with a controller. A motorized valve facilitates more specific and bespoke control over the spraying performed by the liquid spraying system. This may, for instance, allow distinct areas covered by the set of piping to be individually and controllably sprayed.

Optionally, each sprinkler is configured to spray liquid carried by the set of piping only when a liquid pressure in the set of piping exceeds a second predetermined pressure threshold. Any herein described controller may accordingly be configured to control a liquid pressure in the set of piping to thereby control whether or not each sprinkler is activated (i.e. to spray liquid into the livestock stable).

Optionally, the set of piping consists of a single pipe or a plurality of serially connected pipes.

In preferred examples, the liquid for consumption by livestock is water. Water provides a suitable liquid for livestock nourishment and consumption, whilst also being suitable for effective spraying (e.g. for fire/dust/temperature suppression).

There is also proposed a liquid supply arrangement comprising a plurality of any herein described liquid supply systems, wherein the set of piping of each supply system is configured to draw liquid from a same liquid supply.

This approach effectively provides a modular liquid supply arrangement, in which different areas around the livestock stable can be associated with different liquid supply systems so that control over sprinkling can be performed on a modular basis (e.g. area by area).

Optionally, the set of piping of each supply system is connected to provide liquid to, or draw liquid from, the set of piping of at least one other supply system.

In some examples, the sets of piping of all supply systems are connected serially with one another. However, in other examples, the sets of piping may be connected in parallel to one another.

In some examples, the liquid supply arrangement further comprises one or more livestock stimulus generators configured to generate a livestock stimulus for encouraging the movement of livestock within the vicinity of the livestock stimulus generator; and a livestock controller configured to encourage movement of the livestock in the livestock stable towards one or more desired areas and/or away from one or more undesired areas of the livestock stable by controlling the operation of the one or more livestock stimulus generators.

The one or more livestock stimulus generators may comprise one or more sprinklers of the liquid supply arrangement and/or one or more light output systems and/or one or more sound output systems and/or one or more smell output systems.

The one or more undesired areas may comprise an area of the livestock stable predicted to contain a fire.

In an embodiment, the light output system comprises one or more light sources and wherein the light output system is configured to control the intensity of one or more light sources to encourage the movement of the livestock in the livestock stable.

In an embodiment, the light output system comprises at least two light sources configured to generate light with a different spectral power distribution and wherein the light output system is further configured to control the intensity of the at least two light sources to encourage the movement of the livestock in the livestock stable. As a result, the spectral power distribution of the light generated by the light output system is varied.

By varying the intensity and/or the spectral power distribution of the light, the livestock may be repelled from an unsafe area in order to stimulate them to move towards a safer area of the livestock stable, or the livestock may be attracted towards a safer area in order to stimulate them to move away from an unsafe area. The unsafe or undesired area may be an area where a fire is expected to start, or a fire is pending.

There is also proposed a liquid supply arrangement that comprises a plurality of liquid supply systems and a livestock control system comprising a livestock controller configured to encourage movement of the livestock in the livestock stable towards one or more desired areas and/or away from one or more undesired areas of the livestock stable by controlling the operation of one or more sprinklers of the plurality of liquid supply systems.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a liquid supply system;
Fig. 2 illustrates a sprinkler;
Fig. 3 illustrates another sprinkler;
Fig. 4 illustrates yet another sprinkler;
Fig. 5 illustrates one approach for controlling a liquid pressure in a set of piping;
Fig. 6 illustrates another approach for controlling a liquid pressure in a set of piping;
Fig. 7 illustrates various modes of operation for a sprinkler;
Fig. 8 illustrates an approach for redirecting water flow from a set of piping;
Fig. 9 illustrates a sprinkler with an integrated nipple;
Fig. 10 illustrates an alternative sprinkler with an integrated nipple;
Fig. 11 illustrates a liquid supply arrangement; and
Fig. 12 illustrates a livestock control system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention defined by the appended claims. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a liquid supply system in which one or more nipples and one or more sprinklers are all connected to a same set of piping that provides livestock consumable liquid. A nipple provides an amount of liquid responsive to an interaction by the livestock with the nipple. A sprinkler sprays or sprinkles liquid responsive to some predetermined criteria/criterion being met, so as to controllable spray/sprinkle the liquid. In this way, the same liquid is provided for consumption by the livestock as is sprayed by the sprinkler. Each of the one or more sprinklers is integrated into a respective nipple.

The invention is based on the realization that improved sprinkling can be achieved if the same set of piping is used to supply any nipples and sprinklers of a liquid supply system. This is because the sprinklers will be automatically positioned in an area in which livestock congregate to perform more effective and appropriate sprinkling/spraying of water (e.g. to improve heat/air conditions or to suppress fire). Approaches also reduce the amount of piping required.

Embodiments can be employed in any suitable livestock stable, such as those used to house and raise poultry (e.g. chickens, ducks or turkeys), pigs, cattle, sheep and other farm animals.

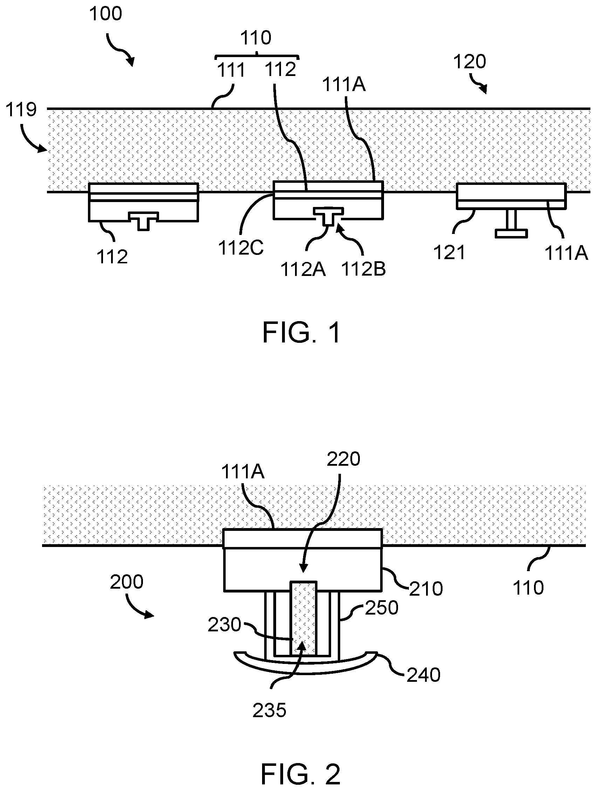

Figure 1 illustrates a liquid supply system 100 according to an embodiment of the invention. The liquid supply system 100 is designed for a livestock stable.

The liquid supply system 100 comprises a liquid drinking system 110. The liquid drinking system 110 comprises a set of piping 111 and one or more nipples 112.

The set of piping 111 is configured to carry liquid 119 suitable for consumption by livestock. Examples of suitable liquids include (drinking) water, treated or supplemented water (e.g. mineral water or water with medicinal additives), liquid feed and/or a mix of water and liquid feed. Other suitable examples will be apparent to the person skilled in the art. The set of piping may consist, for instance, of a single pipe or a series of connected pipes (where liquid flows in sequence from one pipe to the next).

Each of the one or more nipples 112 is connected to the set of piping 111, e.g. at a respective interface 111A. Each nipple is configured to release liquid from the set of piping 111 responsive to an interaction with livestock, so that the released liquid can be consumed or drunk by the livestock. The mechanism for facilitating the release of the liquid may depend upon the type of livestock. For instance, a nipple designed for a chicken may release a drop of liquid in response to a peck, whereas a nipple designed for a calf may release liquid responsive to the calf sucking on the nipple (e.g. the nipple acts as a teat).

The illustrated nipple 112 comprises a movable stopper 112A and a hole 112B. The movable stopper 112A is movable between a first position, in which the hole 112B is covered, and a second position, in which the hole is uncovered to allow liquid to flow through the hole. The movable stopper 112A may be biased towards the first position, e.g. due to the effects of gravity and/or liquid pressure from the set of piping. The movable stopper may be moved to the second position by livestock (e.g. by a chicken pecking the stopper 112A) to allow the livestock to release a first amount of liquid.

The liquid supply system 100 also comprises a liquid spraying system 120. The liquid spraying system comprises one or more sprinklers 121 integrated into a respective nipple, which are each connected to the set of piping 111 of the liquid drinking system 110.

Each sprinkler is configured to controllably spray the liquid carried by the set of piping within the livestock stable. In the context of the present disclosure, a sprinkler can controllably spray liquid if the sprinkler is able to switch from a non-spraying mode to a spraying mode responsive to a stimulus. The switching may be reversible or permanent.

Figure 2 illustrates a simple example of a suitable sprinkler 200 integrated into a respective nipple, i.e. a combined sprinkler-nipple. In this example, the sprinkler 200 comprises a connector 210, for connecting to an interface 111A of the set of piping 111, having a nozzle 220 for spraying or releasing liquid. The interface 111A may have been previously designed or used for connecting to a nipple.

A liquid capsule 230 contains heat-sensitive liquid 235, and is connected and positioned so as to block the nozzle to, when intact, prevent the nozzle from spraying or releasing liquid. The heat-sensitive liquid 235 in the liquid capsule 230 expands as temperature increases and, when a predetermined temperature ("operating temperature") is reached, causes the liquid capsule to break. This allows the nozzle to spray or release liquid 119 from the set of piping 111. The liquid capsule may be formed of a suitable breakable material, such as glass or ceramic

The liquid capsule may be replaced by a fusible link, which performs the same function of responding to heat to activate the sprinkler. Other suitable heat-sensitive elements will be apparent to the skilled person.

The sprinkler 200 may further comprise, as illustrated, a deflector 240 for distributing or spraying liquid released by the nozzle 220 over a larger area. The deflector 240 may be connected to the connector 210 by a frame 250. The liquid capsule 230 may also be held by this frame 250. The deflector and frame can be omitted in some examples.

The sprinkler 200 provides an example of a sprinkler that controllably sprays liquid responsive to a temperature rise. In particular, the sprinkler 200 can switch from a non-spraying mode to a spraying mode. However, this switch is non-reversible.

An alternative to the liquid capsule 230 is a controllable valve, being a valve that can be opened and closed responsive to a communication from a control system. This communication can be wired or wireless. In some scenarios, the control system may be configured to detect when spraying is desired and open and close the valve appropriately. This provides a sprinkler that can switch from a non-spraying mode to a spraying mode and back again.

Turning back to Figure 1, it is recognized that to facilitate suitable surface area coverage by a sprinkler in a spraying mode, the pressure of liquid carried by the set of piping may need to be greater than desired for releasing liquid to livestock.

To account for this, in some examples, the liquid drinking system 110 may be configured to pressure the liquid 119 carried by the set of piping 111, and each nipple 112 may further comprise a pressure reduction valve 112B. This advantageously reduces the pressure of liquid when released to the livestock, to avoid damaging or injuring the livestock.

An alternative approach could be to control the pressure in the set of piping 111 responsive to a determination of whether or not spraying is desired. Thus, if spraying is desired, the liquid pressure may be increased and, if spraying is not desired, the liquid pressure can be decreased.

This approach for controlling pressure could be exploited to provide alternative sprinklers. In particular, sprinklers may be adapted to be responsive to changes in liquid pressure in the set of piping 111. Thus, switching from a non-spraying mode to a spraying mode may be performed responsive to a pressure exceeding some predetermined value.

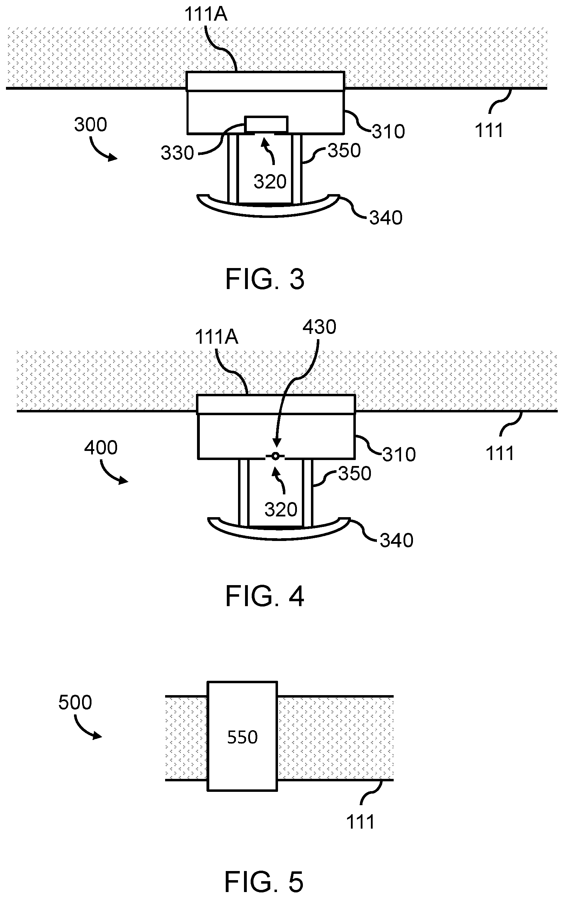

Figure 3 illustrates a sprinkler 300 integrated into a respective nipple, i.e. a combined sprinkler-nipple, for use in such an embodiment.

The sprinkler 300 comprises a connector 310, for connecting to an interface 111A of the set of piping 111, having at least one nozzle 320 for spraying or releasing liquid.

The sprinkler 300 further comprises a pressure-sensitive membrane 330, configured to prevent the nozzle(s) 320 from releasing/spraying liquid before a pressure of the liquid (in the set of piping 111) exceeds some predetermined threshold. Once the pressure exceeds a predetermined threshold, the membrane breaks and allows water to be released/sprayed by the nozzle(s) 320.

The sprinkler may comprise a plurality of nozzles, each configured to release or spray water in a different direction. Each nozzle may be formed of a hole in the connector 310.

In some examples the sprinkler 300 may further comprise a deflector 340 for distributing or spraying liquid released by the nozzle 320 over a larger area. The deflector may be connected to the connector 310 by a frame 350. These can be omitted.

Figure 4 illustrates an alternative sprinkler 400 integrated into a respective nipple, i.e. a combined sprinkler-nipple.

The sprinkler 400 differs from the sprinkler 300 in that the pressure-sensitive membrane is replaced with a spring-loaded valve 430. The spring-loaded valve is configured such that, when the liquid pressure exceeds some predetermined threshold, the valve opens and allows liquid to be sprayed or released by the nozzle(s) 320. When the liquid pressure falls below this predetermined threshold, the biasing of the spring causes the valve 430 to close to thereby prevent the nozzle(s) from spraying or releasing liquid. This provides a reversible non-spraying/spraying sprinkler.

Figure 5 illustrates one approach for controlling the liquid pressure in the set of piping 111. In this example, a liquid supply system 500 (of which only part is illustrated) comprises a liquid pressurizing unit 550 that directly controls the pressure in the set of piping 111. Suitable examples of liquid pressurizing units or pressurizers are well known in the art.

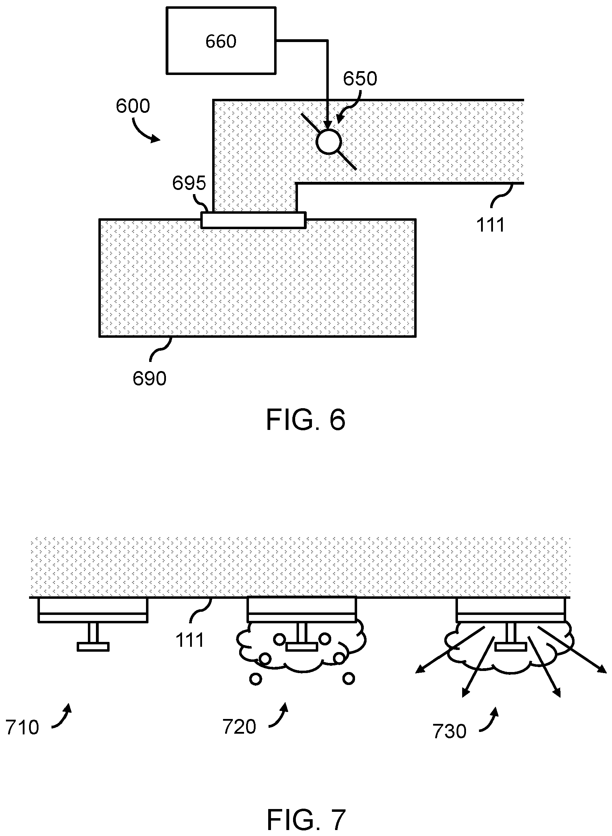

Figure 6 illustrates another approach for controlling the liquid pressure in the set of piping 111. In this example, the liquid supply system 600 (of which only part is illustrated) controls a liquid pressure using a control valve 650 that controls the flow of water into the set of piping 111 (e.g. from a pressurized liquid tank 690 via connector 695). The more open the valve, the greater the liquid pressure in the set of piping 111. A pressure controller 660 may control the operator of the control valve 650, e.g. responsive to one or more triggers or external stimuli.

A number of the described sprinklers facilitate external control over the operation of the sprinkler, i.e. control not performed by the sprinkler itself. This includes controlling the operation of the sprinkler using the liquid pressure of the set of piping and direct control over a valve (or other component) in the sprinkler, e.g. using wireless or wired communications.

Accordingly, there may be provided one or more controllers for controlling the operation of the sprinkler(s), and in particular, to control whether a sprinkler operates in a spraying mode or a non-spraying mode. Such controllers may use any suitable mechanism previously described for controlling the operation of the sprinkler(s).

In one example, the liquid spraying system may further comprise a fire sensor configured to detect the presence or absence of fire in the livestock stable.

Examples of fire sensors include heat and/or smoke sensors. A first fire sensor may comprise a heat sensor that determines whether or not a heat exceeds some predetermined threshold to determine whether or not a fire exists. A second fire sensor may comprise a smoke sensor that determines whether or not a smoke level exceeds some predetermined threshold to determine whether or not a fire exists. A third fire sensor may comprise a heat sensor and a smoke sensor, where the presence of fire is only detected if a detected heat exceeds some predetermined threshold and a detected smoke level exceeds another predetermined threshold.

In such an example, the liquid spraying system may comprise a fire-responsive controller configured to control the one or more sprinklers to spray the liquid carried by the set of piping responsive to the fire sensor detecting the presence of fire in the livestock stable.

In some examples, the liquid spraying system comprises a heat sensor configured to detect a temperature in the livestock stable. Suitable heat sensors include electric thermometers. Such a liquid spraying system may further comprise a heat-responsive controller configured to control the one or more sprinklers to spray the liquid carried by the set of piping responsive to the heat sensor detecting a temperature exceeding a predetermined temperature threshold.

The predetermined temperature threshold may be selected such that, if the temperature exceeds a value that would cause heat stress in the livestock, then the livestock can be sprayed with liquid to cool them down. For instance, in chickens, this predetermined temperature threshold may be a value in the region of 22°C - 30°C, e.g. 25°C. As another example, for sheep or goats, this predetermined temperature threshold may be a value in the region of 25°C - 33°C, e.g. 30°C.

Of course, in other examples, the predetermined temperature threshold may be selected so as to represent an expected temperature indicating a fire in the livestock stable, e.g. a value in the region of 50°C - 80°C, e.g. 68°C.

In some examples, the liquid spraying system comprises a dust sensor configured to measure an amount of dust in the livestock stable. Suitable dust sensors are well known to the skilled person, such as optical dust sensors and/or particulate matter sensors configured to detect particular matter. Examples of suitable particular matter sensors include PM2.5 sensors, PM1 sensors and PM10 sensors.

In such examples, the liquid spraying system may further comprise a dust-responsive controller configured to control the one or more sprinklers to spray the liquid carried by the set of piping responsive to the dust sensor detecting an amount of dust exceeding a predetermined dust threshold. In some examples, a dust sensor may make use of a temperature reading from a heat sensor and distinguish between smoke and dust particles based on the measured temperature.

This approach recognizes that high levels/concentration of airborne dust particular can cause health problems in livestock, such as respiration problems or eye/skin/throat irritation. The amount of dust in the air can be reduced through the use of spraying liquid, which will reduce the amount of dust in the air. Activation of sprinklers in response to high levels of dust can thereby directly improve the environment for the livestock, resulting in improved wellbeing of the livestock.

A combination of any of the above-described controllers may be used. If a combination is used, it will be appreciated that a controller attempting to control the sprinkler(s) to operate in a spraying mode will override any controller attempting to control the sprinkler(s) to operate in a non-spraying mode.

Any herein described sensor could be integrated into one or more other electronic components in the livestock stable. For instance, any herein described sensor could be integrated into a luminaire or lighting element, such that each sensor comprises a light emitting element.

A number of the described sprinklers could be controlled to operate in a plurality of different spraying modes. For instance, the sprinkler of Figure 4 or a sprinkler containing a directly controllable valve could be controlled to sprinkle different volumes or pressures of water (per second).

Figure 7 conceptually illustrates three example modes of operation for a sprinkler integrated into a respective nipple. There is provided a non-spraying mode 710, in which no liquid is sprayed or released from the sprinkler. There is also provided a first spraying mode or misting mode 720, in which liquid is released in a mist (e.g. to provide a spread or mass of droplets at a pressure or volume below some predetermined value). There is also provided a second spraying mode or hard spraying mode 730, in which liquid is forcefully sprayed (e.g. to provide a spread or mass of droplets at a pressure or volume above a predetermined value).

Any controllers of the sprinkler system may be appropriately configured to select and define a particular mode of operation for a sprinkler.

In examples where the sprinkler system comprises a fire sensor and a fire-responsive controller, the fire-responsive controller may be configured to control the sprinkler(s) to operate in the second spraying or hard spraying mode responsive to detecting the presence of a fire. The fire-responsive controller may be configured to control the sprinkler(s) to operate in the non-spraying mode responsive to detecting the absence of a fire.

In examples where the sprinkler system comprises a heat sensor and a heat-responsive controller, the heat-responsive controller may be configured to control the sprinkler(s) to operate in the non-spraying mode responsive to the temperature falling below a first predetermined heat threshold, to operate in the first spraying mode or misting mode responsive to the temperature falling between a first predetermined heat threshold and a second predetermined heat threshold and to operate in the second spraying mode or hard spraying mode responsive to the temperature exceeding the second predetermined heat threshold. The second predetermined heat threshold is greater than the first predetermined heat threshold.

In this scenario, the first predetermined heat threshold may represent a temperature that would cause heat stress in the livestock. The second predetermined heat threshold may represent a temperature that indicates the presence of a fire in the vicinity of the heat sensor. Suitable example temperatures have been previously described.

In examples where the liquid spraying system comprises a dust sensor and a dust-responsive controller, the dust-responsive controller may be configured to control the sprinkler(s) to operate in the first spraying mode or misting mode responsive to the dust sensor detecting a dust level exceeding a predetermined dust level. The dust-responsive controller may be configured to control the sprinkler(s) to operate in the non-spraying mode responsive to the dust sensor detecting a dust level falling below the predetermined dust level.

This approach recognizes that a fire-suppressing spray is not necessary for reducing a level of dust and could lead to injuring or adversely affecting livestock (e.g. by lowering their body temperature) and may waste valuable liquid resource. Rather, a misting spray would be preferable to reduce the level of airborne dust.

A combination of any of the above-described controllers may be used. If a combination is used, it will be appreciated that a controller attempting to control the sprinkler(s) to operate in any spraying mode will override any controller attempting to control the sprinkler(s) to operate in a non-spraying mode. Similarly, a controller attempting to control the sprinkler(s) to operate in the second spraying mode or hard spraying mode will override any controller attempting to control the sprinkler(s) to operate in the non-spraying mode or the first spraying mode or misting mode.

In above-described embodiments, the sprinkler(s) and nipple(s) are aligned, such that a direction of liquid out of both the sprinkler(s) and nipple(s) is in substantially the same direction (e.g. downwards, in a direction of gravity). However, in some examples, not according to the invention, the sprinkler may be configured to provide liquid in an opposite direction (e.g. upwards).

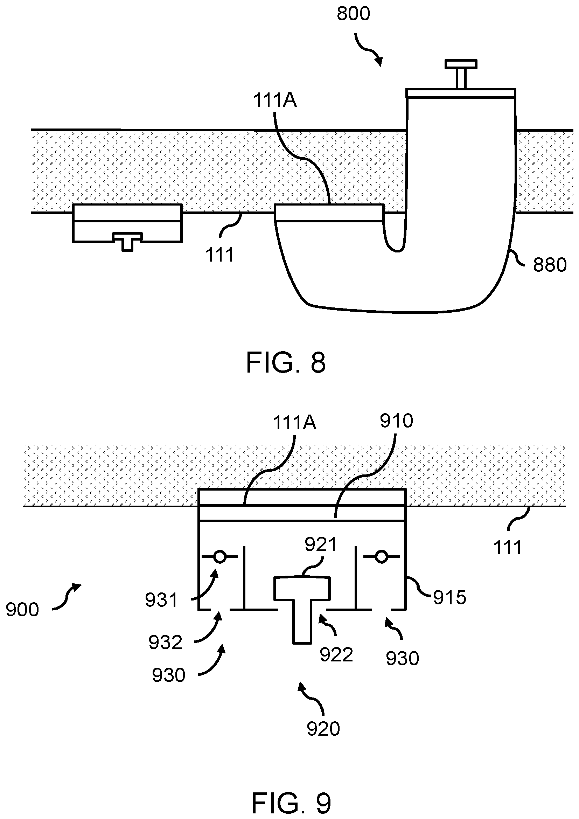

Figure 8 conceptually illustrates this approach, not according to the invention, in which the sprinkler 800 comprises a redirecting pipe 880 for redirecting liquid flow out of the set of piping. The redirecting pipe 880 connects to an interface 111A of the set of piping 111. The remainder of the sprinkler may be embodied as any other herein described sprinkler, excepting that any connector of the sprinkler instead connects to the redirecting pipe.

Other suitable examples for redirecting the flow of water out from the set of piping with respect to a sprinkler will be apparent to the skilled person.

The liquid supply system 100 illustrated in Figures 1 to 7 demonstrates an example where aach of the one or more sprinklers is integrated into a respective nipple. In this way, the liquid supply system 100 comprises one or more sprinkler-nipples, being a combination of sprinklers and nipples.

Thus, each sprinkler may comprise a first liquid release mechanism configured to release a first amount of liquid from the set of piping responsive to an interaction with livestock, so that each sprinkler is able to act as a nipple; and a second liquid release mechanism configured to controllably spray liquid from the set of piping.

The nipple(s) and/or sprinkler(s) of any previously described liquid supply system may be replaced by a respective sprinkler-nipple combination (simply: sprinkler). This provides a greater coverage of liquid availability for the livestock and sprinkler integration.

Figure 9 illustrates a first example of such a sprinkler 900, i.e. a combined sprinkler-nipple. The illustrated sprinkler is configured for use in a system in which a liquid pressure, of liquid carried by the set of piping, controls a mode of the sprinkler.

The sprinkler 900 comprises a connector 910 for connecting a liquid reservoir 915 to an interface 111A of the set of piping 111. The interface 111A may have been previously designed or used for connecting to a nipple. The liquid reservoir is filled with liquid by the set of piping. The liquid reservoir can be omitted in some embodiments, e.g. the set of piping may act as a liquid reservoir.

The sprinkler 900 further comprises at least one first liquid release mechanism 920, which releases a first amount of liquid from the sprinkler when livestock interacts therewith. Here, the first liquid release mechanism comprises a movable stopper 921 and a hole 922 (being a hole of the liquid reservoir). The movable stopper 921 is movable between a first position, in which the hole 922 is covered, and a second position, in which the hole is uncovered to allow liquid to flow through the hole. The movable stopper 921 may be biased towards the first position, e.g. due to the effects of gravity and/or liquid pressure from the set of piping. The movable stopper may be moved to the second position by livestock (e.g. by a chicken pecking the stopper 921) to allow the livestock to release a first amount of liquid.

The sprinkler further comprises at least one second liquid release mechanism 930. The second liquid release mechanism comprises a spring-loaded valve 931 and one or more nozzles 932. Each nozzle may comprise, for instance, a hole in the liquid reservoir or a liquid directing aperture (e.g. a spray nozzle).

The spring-loaded valve is positioned and configured so as to control a liquid flow to the one or more nozzles 932. The spring-loaded valve is configured such that, when the liquid pressure exceeds some predetermined threshold, the valve opens and allows liquid to be sprayed or released by the nozzle(s) 932. When the liquid pressure falls below this predetermined threshold, the biasing of the spring causes the valve 931 to close to thereby prevent the nozzle(s) from spraying or releasing liquid. This provides a reversible non-spraying/spraying sprinkler.

Thus, a sprinkler with an integrated nipple (or vice versa) can be provided. The sprinkler 900 is switchable from a non-spraying mode to at least one spraying mode responsive to a liquid pressure exceeding some predetermined value. It will be appreciated how different spraying modes could be achieved through the use of different levels of liquid pressure.

In a modification to the sprinkler 900, the spring-loaded valve could be replaced with a motorized valve that is responsive to communications with a controller. Thus, a controller may directly control an opening or closing of the valve, and thereby the mode (spraying or non-spraying) of the sprinkler. Such an embodiment could, for instance, be used in a liquid supply system in which a liquid pressure is kept constant. In such an example, the first liquid release mechanism may further comprise a pressure reduction valve (not shown) to reduce a pressure of liquid available to the hole 922.

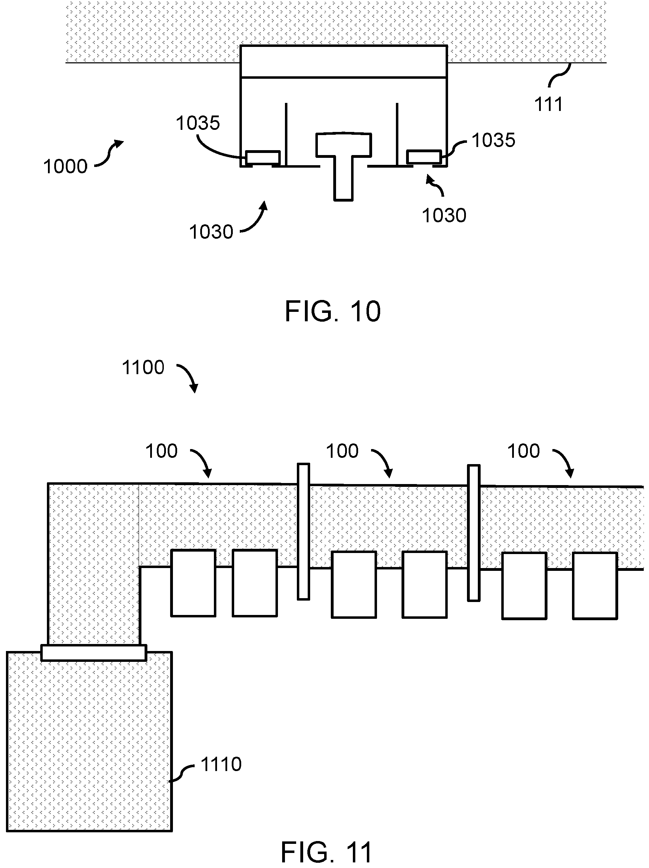

Figure 10 illustrates a second example of a sprinkler 1000 that comprises an integrated nipple, i.e. a combined sprinkler-nipple.

The sprinkler 1000 differs from the sprinkler 900 described with reference to Figure 9 in that the second liquid release mechanism 1030 comprises one or more pressure sensitive membranes 1035 instead of the spring-loaded valve. Each pressure sensitive membrane 1035 is configured to cover one or more nozzles (e.g. holes). Each pressure sensitive membrane is configured to rupture, to allow water to exit the nozzles, responsive to a liquid pressure exceeding some predetermined threshold. This effectively facilitates a one-way switching of the sprinkler from a non-spraying mode to a spraying mode (responsive to a pressure exceeding some predetermined value).

Figure 11 illustrates a liquid supply arrangement 1100 according to an embodiment. The liquid supply arrangement comprises a plurality of liquid supply systems 100, suitable examples of which have been previously described.

Each liquid supply system draws liquid from a same liquid supply 1110 (which may also form part of the liquid supply arrangement). In the illustrated example, this is achieved by serially connected the sets of piping of different liquid supply systems together serially. However, this is not essential. In some examples, the set of piping of each supply system is connected to provide to, or draw liquid from, the set of piping of at least one other supply system. In other examples, each set of piping is individually connected to the liquid supply 1110, so that the sets of piping are effectively connected in parallel.

The proposed liquid supply arrangement provides an approach for modular control over the spraying/sprinkling performed by the sprinklers. In particular, each sprinkler may be individually controlled by a respective controller (and respective sensor connected to said controller).

Of course, it will be appreciated that controllers of different liquid supply systems may be integrated into a single control system, e.g. a single computer.

In some examples, the control of the spraying/sprinkling performed by one liquid supply system controls the spraying/sprinkling performed by one or more other liquid supply systems. For instance, if it is determined to place the sprinkler of one liquid supply system in a spraying mode, then the sprinklers of neighboring liquid supply systems may also be placed in a spraying mode.

The proposed use of modular liquid supply systems also facilitates more complex control over the operation of the sprinklers.

For instance, sprinklers may be activated to guide or attract livestock to a desired area. In particular, it is recognized that livestock would be repelled by the activation of sprinklers. This means that livestock can be guided away from an undesirable area by activating sprinklers in that area. As a further example, a sprinkling strategy could be configured to create a barrier of sprinkling/spraying water to prevent or discourage livestock from passing through the barrier, e.g. towards the undesirable area.

In this way, the sprinklers of the liquid supply systems may effectively act as repellants for diverting or guiding livestock away from an undesirable area (e.g. a location of fire or area of high dust/pollutants) and towards a desired area such as a "safe area" or an emergency exit.

There is proposed the concept of a livestock control system. The livestock control system is configured to control the operation of one or more sprinklers of a liquid supply arrangement to encourage or discourage a movement of livestock towards or away from one or more areas of a livestock stable.

The livestock control system may comprise an input interface configured to receive an indication of one or more desired or undesirable areas. An undesirable area may be an area in the presence of a fire is identified (e.g. by a fire/heat sensor) or an area containing an undesirably large amount of dust (e.g. by a dust sensor). A desired area may be a safe area (e.g. an emergency exit) or an area in which no fire/dust is detected. As another example, a desired area may simply be an area where a livestock handler wishes the livestock to go or muster, e.g. for treatment, collection, counting or other agricultural purposes.

The livestock control system comprises an output interface configured to control the one or more sprinklers responsive to the indication of one or more desired or undesirable areas.

The livestock control system may also receive, at the input interface, flock distribution information, which identifies a distribution and/or location information about the livestock within the livestock barn. This information can be used to determine a strategy for controlling a movement or route of the livestock within the livestock stable towards a desired area or away from an undesirable area (e.g. to skirt around an undesirable area, avoid undesirable areas and/or minimize exposure to an undesirable area). The distribution and/or location information could be generated using one or more cameras, microphones and/or location sensors (e.g. attached to livestock) to monitor the locations of livestock within the livestock stable.

The livestock control system may, of course, comprise one or more flock distribution sensors configured to identify a distribution and/or location information of the livestock. Examples include cameras, microphones and/or location sensors.

This concept of using sprinklers to guide livestock away from an undesirable area (e.g. towards a desired area) could be adopted for other types of attractive and/or repellant stimuli.

For instance, it has been identified that appropriately configured lights, sounds and smells would attract and/or repel livestock towards or away from particular areas.

Thus, instead of or additional to the sprinklers, the livestock control system may control one or more stimulus generators or livestock perceptible outputs. More generally, a livestock control system is configured to control the operation of one or more stimulus generators to encourage or discourage a movement of livestock towards or away from one or more areas of a livestock stable.

Suitable stimulus generators include sprinklers, lights, audio output devices, smell output devices and so on. In some examples, a stimulus generator simulates natural repellants for the livestock, e.g. simulating a predator flying over, simulating fire outbreak or lightning.

It is also recognized that livestock will move to familiar areas, which are considered safe, and move away from unfamiliar areas, whose safety status is unknown. Therefore, the stimulus generators may be configured to provide known (to the livestock) stimulus in desired areas (e.g. known lighting levels, colors and/or patterns) and provide unknown (to the livestock) stimulus in undesirable areas. In this way, livestock can be guided to desired areas and away from undesirable areas through the use of one or more stimulus generators.

It has previously been mentioned that undesirable and desired areas could be associated with dangerous (e.g. areas of fire/smoke/dust) and less dangerous (e.g. areas with less fire/smoke/dust) areas respectively. The location of such areas could be identified using one or more fire, dust, temperature and/or heat stress sensors, which can be appropriately positioned at known locations around the livestock stable.

According to a herein proposed concept, there is provided a livestock control system for encouraging the movement of livestock within a livestock stable. The livestock control system comprises a livestock controller and one or more livestock stimulus generators, configured to generate one or more stimuli for attracting or repelling livestock. The livestock controller is configured to control the operation of the livestock stimulus generator to encourage movement of the livestock towards one or more desired areas and/or away from one or more undesirable areas.

The livestock stimulus generators may comprise one or more sprinklers, lights or light output devices, audio output devices, smell output devices and so on. If used, sprinklers may be integrated into a liquid supply arrangement/system as previously described.

The livestock controller may define a desired and/or undesirable area responsive to one or more sensors, which detect one or more characteristics of the livestock stable, e.g. heat, dust, heat stress, presence/absence of fire and so on. The presence of an undesirable value for any of these one or more characteristics may identify the location of an undesirable area. For instance, a predicted presence of a fire may be used to identify the location of an undesirable area surrounding the fire.

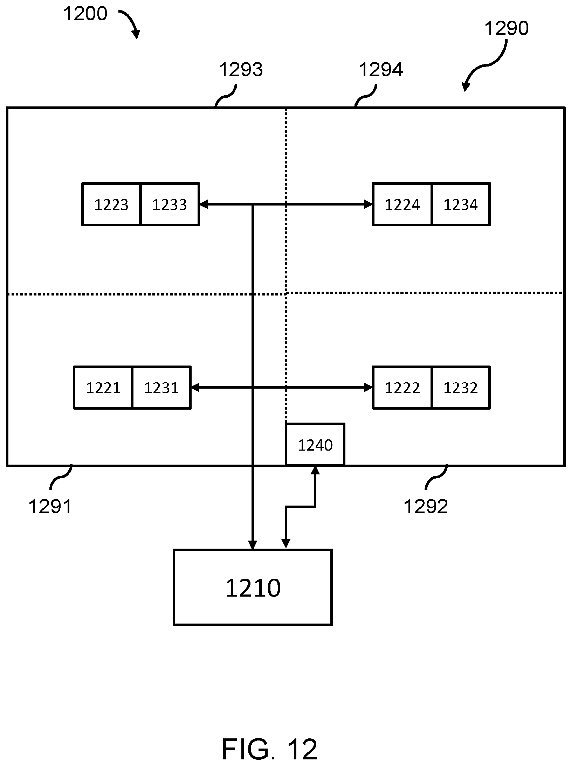

Figure 12 conceptually illustrates a livestock control system 1200 according to an embodiment. The livestock control system 1200 is configured to encourage a movement of livestock within a livestock stable 1290, which is schematically illustrated in plan view.

The livestock control system 1200 comprise a livestock controller 1210 and a plurality of livestock stimulus generators 1221, 1222, 1223, 1224. Each livestock stimulus generator is configured to generate a livestock stimulus for encouraging the movement of livestock within the vicinity of the livestock stimulus generator. Suitable examples of livestock stimulus generators have been previously described.

The livestock controller 1210 can control the operation of each livestock stimulus generator to attract and/or repel livestock towards or away from the livestock stimulus generator. In this way, each livestock stimulus generator can define an area 1291, 1292, 1293, 1294 within the livestock stable 1290 to which livestock can be attracted or repelled from.

The livestock stimulus generators 1221, 1222, 1223, 1224 may comprise one or more sprinklers, lights or light output devices, audio output devices, smell output devices and so on. The sprinklers are integrated into a liquid supply arrangement/system as previously described.

The livestock controller may be responsive to one or more sensors 1231, 1232, 1233, 1234, that detect one or more potentially undesirable characteristics of the livestock stable 1290, such as the presence/absence of fire, a level of smoke/dust/heat and so on. The livestock controller 1210 may control the operation of the livestock stimulus to encourage livestock to avoid undesirable areas (e.g. where an undesirable characteristic exceeds some threshold) and move to desirable areas (e.g. where an undesirable characteristic is less or below some threshold).

The livestock controller may further be responsive to livestock monitoring apparatus 1240 that monitors the location or distribution of livestock within the livestock stable. This information can be used to appropriately control or define the route of livestock (through control of the stimulus generators) to a desired area, whilst optimally avoiding undesirable areas. One example of a suitable livestock monitoring apparatus is a camera, e.g. with livestock identification functionality. Other examples include location trackers.

Any herein proposed liquid supply system and/or arrangement may comprise such a livestock control system. In some examples, at least one of the one or more livestock stimulus generators is formed of a sprinkler of the liquid supply system/arrangement.

Thus, there may be a liquid supply arrangement that comprises a plurality of liquid supply systems, suitable examples of which have been previously described and a livestock control system comprising one or more livestock stimulus generators configured to generate a livestock stimulus for encouraging the movement of livestock within the vicinity of the livestock stimulus generator; and a livestock controller configured to encourage movement of the livestock in the livestock stable towards one or more desired areas and/or away from one or more undesired areas of the livestock stable by controlling the operation of the one or more livestock stimulus generators.

The one or more livestock stimulus generators may comprise one or more sprinklers of the liquid supply arrangement and/or one or more light output systems and/or one or more sound output systems and/or one or more smell output systems.

The light output system may comprise one or more light sources and the light output system being configured to control the intensity of one or more light sources to encourage the movement of the livestock in the livestock stable.

The light output system may comprise at least two light sources being configured to generate light with a different spectral power distribution and the light output system further being configured to control the intensity of the at least two light sources to encourage the movement of the livestock in the livestock stable. As a result, the spectral power distribution of the light generated by the light output system is varied to stimulate the livestock towards a safer area in the livestock stable.

The one or more undesired areas may comprise an area of the livestock stable predicted to contain a fire. Such a fire could be detected by a fire sensor of one or more of the liquid supply systems of the liquid supply arrangement. In this way, one or more sprinklers may be automatically activated responsive to detection of a fire, and livestock can be encouraged to move away from an area containing the fire using the livestock stimulus generators.

Variations to the disclosed embodiments can be understood and effected by those skilled in the art in practicing the claimed invention defined by the appended claims, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". Any reference signs in the claims should not be construed as limiting the scope.

## Claims

1. A liquid supply system (100) for a livestock stable, the liquid supply system comprising:
a liquid drinking system (110) comprising:
a set of piping (111) configured to carry liquid (119) suitable for consumption by livestock;
a liquid spraying system (120) comprising one or more sprinklers (121) connected to the set of piping of the liquid drinking system and configured to controllably spray the liquid carried by the set of piping within the livestock stable; **characterized in that** the liquid drinking system (110) comprises one or more nipples (112) connected to the set of piping and configured to release liquid, carried by the set of piping, for consumption by the livestock responsive to an interaction with the livestock,
and that each of the one or more sprinklers (121) is integrated into a respective nipple (112).

2. The liquid supply system (100) of claim 1, wherein the liquid spraying system (120) further comprises:
a fire sensor configured to detect the presence or absence of fire in the livestock stable; and
a fire-responsive controller configured to control the one or more sprinklers (121) to spray the liquid (119) carried by the set of piping (111) responsive to the fire sensor detecting the presence of fire in the livestock stable.

3. The liquid supply system (100) of any of claims 1 or 2, wherein the liquid spraying system (120) further comprises:
a heat sensor configured to detect a temperature in the livestock stable; and
a heat-responsive controller configured to control the one or more sprinklers (121) to spray the liquid (119) carried by the set of piping (111) responsive to the heat sensor detecting a temperature exceeding a predetermined temperature threshold.

4. The liquid supply system (100) of any of claims 1 to 3, wherein the liquid spraying system (120) further comprises:
a dust sensor configured to measure an amount of dust in the livestock stable; and
a dust-responsive controller configured to control the one or more sprinklers (121) to spray the liquid (119) carried by the set of piping (111) responsive to the dust sensor detecting an amount of dust exceeding a predetermined dust threshold.

5. The liquid supply system (100) of any of claims 1 to 4, wherein each of the one or more sprinklers (900) comprises:
a first liquid release mechanism (920) configured to release a first amount of liquid from the set of piping responsive to an interaction with livestock, so that each sprinkler is able to act as a nipple; and
a second liquid release mechanism (930, 1030) configured to controllably spray liquid from the set of piping (111).

6. The liquid supply system (100) of claim 5, wherein the second liquid release mechanism (930) of each sprinkler is configured to spray liquid from the set of piping (111) responsive to the liquid pressure in the set of piping exceeding a first predetermined pressure threshold.

7. The liquid supply system (100) of claim 5 or 6, wherein the second liquid release mechanism (930) comprises a spring-loaded valve (931).

8. The liquid supply system (100) of claim 5, wherein the second liquid release mechanism (930) comprises a motorized valve responsive to communications with a controller.

9. The liquid supply system (100) of any of claims 1 to 8, wherein the set of piping (111) consists of a single pipe or a plurality of serially connected pipes.

10. A liquid supply arrangement (1100) comprising a plurality of liquid supply systems (100) according to any of claims 1 to 9, wherein the set of piping (111) of each supply system is configured to draw liquid from a same liquid supply (1110).

11. The liquid supply arrangement (1100) of claim 10, further comprising:
one or more livestock stimulus generators (1221, 1222, 1223, 1224) configured to generate a livestock stimulus for encouraging the movement of livestock within the vicinity of the livestock stimulus generator; and
a livestock controller (1210) configured to encourage movement of the livestock in the livestock stable towards one or more desired areas and/or away from one or more undesired areas of the livestock stable (1290) by controlling the operation of the one or more livestock stimulus generators.

12. The liquid supply arrangement (1100) of claim 11 wherein the one or more livestock stimulus generators (1221, 1222, 1223, 1224) comprises one or more sprinklers (121) of the liquid supply arrangement and/or one or more light output systems and/or one or more sound output systems and/or one or more smell output systems.

13. The liquid supply arrangement (1100) of claim 11 or 12, wherein the one or more undesired areas comprises an area of the livestock stable (1290) predicted to contain a fire.

14. The liquid supply arrangement (1100) of claims 12 or 13, the light output system comprising one or more light source and wherein the light output system is configured to control the intensity of one or more light sources to encourage the movement of the livestock in the livestock stable.

15. The liquid supply arrangement (1100) of claim 14, the light output system comprising at least two light sources configured to generate light with a different spectral power distribution and wherein the light output system is further configured to control the intensity of the at least two light sources to encourage the movement of the livestock in the livestock stable.

## Patentansprüche

1. Flüssigkeitsversorgungssystem (100) für einen Viehstall, das Flüssigkeitsversorgungssystem umfassend:
ein Flüssigkeitstrinksystem (110), umfassend:
einen Satz von Rohrleitungen (111), der konfiguriert ist, um Flüssigkeit (119), die für einen Verzehr durch Vieh geeignet ist, zu transportieren;
ein Flüssigkeitssprühsystem (120), umfassend einen oder mehrere Sprinkler (121), die mit dem Satz von Rohrleitungen des Flüssigkeitstrinksystems verbunden und konfiguriert sind, um die Flüssigkeit, die durch den Satz von Rohrleitungen transportiert wird, innerhalb des Viehstalls kontrolliert zu sprühen; **dadurch gekennzeichnet, dass** das Flüssigkeitstrinksystem (110) einen oder mehrere Nippel (112) umfasst, die mit dem Satz von Rohrleitungen verbunden und konfiguriert sind, um als Reaktion auf eine Interaktion mit dem Vieh Flüssigkeit, die durch den Satz von Rohrleitungen getragen wird, für den Verzehr durch das Vieh freizugeben,
und dass jeder des einen oder der mehreren Sprinkler (121) in einen entsprechenden Nippel (112) eingebaut ist.

2. Flüssigkeitsversorgungssystem (100) nach Anspruch 1, wobei das Flüssigkeitssprühsystem (120) ferner umfasst:
einen Feuersensor, der konfiguriert ist, um das Vorhandensein oder das Nichtvorhandensein eines Feuers in dem Viehstall zu erfassen; und
eine auf Feuer reagierende Steuerung, die konfiguriert ist, um als Reaktion darauf, dass der Feuersensor das Vorhandensein von Feuer in dem Viehstall erfasst, den einen oder die mehreren Sprinkler (121) zu steuern, um die Flüssigkeit (119), die durch den Satz von Rohrleitungen (111) transportiert wird, zu sprühen.

3. Flüssigkeitsversorgungssystem (100) nach einem der Ansprüche 1 oder 2, wobei die Flüssigkeitssprühsystem (120) ferner umfasst:
einen Wärmesensor, der konfiguriert ist, um eine Temperatur in dem Viehstall zu erfassen; und
eine wärmeempfindliche Steuerung, die konfiguriert ist, um als Reaktion darauf, dass der Wärmesensor eine Temperatur erfasst, die einen vorbestimmten Temperaturschwellenwert überschreitet, den einen oder die mehreren Sprinkler (121) zu steuern, um die Flüssigkeit (119), die durch den Satz von Rohrleitungen (111) transportiert wird, zu sprühen.

4. Flüssigkeitsversorgungssystem (100) nach einem der Ansprüche 1 bis 3, wobei das Flüssigkeitssprühsystem (120) ferner umfasst:
einen Staubsensor, der konfiguriert ist, um eine Staubmenge in dem Viehstall zu messen; und
eine auf Staub reagierende Steuerung, die konfiguriert ist, um als Reaktion darauf, dass der Staubsensor eine Staubmenge erfasst, die einen vorbestimmten Staubschwellenwert überschreitet, den einen oder die mehreren Sprinkler (121) zu steuern, um die Flüssigkeit (119), die durch den Satz von Rohrleitungen (111) transportiert wird, zu sprühen.

5. Flüssigkeitsversorgungssystem (100) nach einem der Ansprüche 1 bis 4, wobei jeder des einen oder der mehreren Sprinkler (900) umfasst:
einen ersten Flüssigkeitsfreigabemechanismus (920), der konfiguriert ist, um als Reaktion auf eine Interaktion mit dem Vieh eine erste Flüssigkeitsmenge von dem Satz von Rohrleitungen freizugeben, so dass jeder Sprinkler in der Lage ist, als ein Nippel zu arbeiten; und
einen zweiten Flüssigkeitsfreigabemechanismus (930, 1030), der konfiguriert ist, um Flüssigkeit von dem Satz von Rohrleitungen (111) kontrolliert zu sprühen.

6. Flüssigkeitsversorgungssystem (100) nach Anspruch 5, wobei der zweite Flüssigkeitsfreigabemechanismus (930) jedes Sprinklers konfiguriert ist, um als Reaktion darauf, dass der Flüssigkeitsdruck in dem Satz von Rohrleitungen einen ersten vorbestimmten Druckschwellenwert überschreitet, Flüssigkeit von dem Satz von Rohrleitungen (111) zu sprühen.

7. Flüssigkeitsversorgungssystem (100) nach Anspruch 5 oder 6, wobei der zweite Flüssigkeitsfreigabemechanismus (930) ein federbelastetes Ventil (931) umfasst.

8. Flüssigkeitsversorgungssystem (100) nach Anspruch 5, wobei der zweite Flüssigkeitsfreigabemechanismus (930) ein motorisiertes Ventil umfasst, das auf eine Kommunikation mit einer Steuerung reagiert.

9. Flüssigkeitsversorgungssystem (100) nach einem der Ansprüche 1 bis 8, wobei der Satz von Rohrleitungen (111) aus einem einzelnen Rohr oder einer Vielzahl von in Reihe geschalteten Rohren besteht.

10. Flüssigkeitsversorgungsanordnung (1100), umfassend eine Vielzahl von Flüssigkeitsversorgungssystemen (100) nach einem der Ansprüche 1 bis 9, wobei der Satz von Rohrleitungen (111) jedes Versorgungssystems konfiguriert ist, um Flüssigkeit von einer gleichen Flüssigkeitsversorgung (1110) zu beziehen.

11. Flüssigkeitsversorgungsanordnung (1100) nach Anspruch 10, ferner umfassend:
einen oder mehrere Viehimpulsgeneratoren (1221, 1222, 1223, 1224), die konfiguriert sind, um einen Viehimpuls zum Fördern der Bewegung des Viehs in der Nähe des Viehimpulsgenerators zu erzeugen, und
eine Viehsteuerung (1210), die konfiguriert ist, um die Bewegung des Viehs in dem Viehstall in Richtung eines oder mehrerer gewünschter Bereiche und/oder weg von einem oder mehreren unerwünschten Bereichen des Viehstalls (1290) durch Steuern des Betriebs des einen oder der mehreren Viehimpulsgeneratoren zu fördern.

12. Flüssigkeitsversorgungsanordnung (1100) nach Anspruch 11, wobei die eine oder die mehreren Viehimpulsgeneratoren (1221, 1222, 1223, 1224) einen oder mehrere Sprinkler (121) der Flüssigkeitsversorgungsanordnung und/oder ein oder mehrere Lichtausgabesysteme und/oder ein oder mehrere Tonausgabesysteme und/oder ein oder mehrere Geruchsausgabesysteme umfassen.

13. Flüssigkeitsversorgungsanordnung (1100) nach Anspruch 11 oder 12, wobei die eine oder die mehreren unerwünschteren Bereiche einen Bereich des Viehstalls (1290) umfassen, für den vorausgesagt wird, dass er ein Feuer enthält.

14. Flüssigkeitsversorgungsanordnung (1100) nach Anspruch 12 oder 13, wobei das Lichtausgabesystem, umfassend eine oder mehrere Lichtquellen, und wobei das Lichtausgabesystem konfiguriert ist, um die Intensität einer oder mehrerer Lichtquellen zu steuern, um die Bewegung des Viehs in dem Viehstall zu fördern.

15. Flüssigkeitsversorgungsanordnung (1100) nach Anspruch 14, das Lichtausgabesystem umfassend mindestens zwei Lichtquellen, die konfiguriert sind, um Licht mit einer unterschiedlichen spektralen Leistungsverteilung zu erzeugen, und wobei das Lichtausgabesystem ferner konfiguriert ist, um die Intensität der mindestens zwei Lichtquellen zu steuern, um die Bewegung des Viehs in dem Viehstall zu fördern.

## Revendications

1. Système d'alimentation de liquide (100) destiné à une étable à bétail, le système d'alimentation de liquide comprenant :
un système de boisson liquide (110) comprenant :
un ensemble de tuyauterie (111) conçu pour transporter un liquide (119) approprié à la consommation par du bétail ;
un système de pulvérisation de liquide (120) comprenant un ou plusieurs asperseurs (121) raccordés à l'ensemble de tuyauterie du système de boisson liquide et conçu pour pulvériser de manière commandée le liquide transporté par l'ensemble de tuyauterie au sein de l'étable à bétail ; **caractérisé en ce que** le système de boisson liquide (110) comprend un ou plusieurs mamelons (112) raccordés à l'ensemble de tuyauterie et conçus pour libérer du liquide, transporté par l'ensemble de tuyauterie, pour consommation par le bétail en réponse à une interaction avec le bétail,
et **en ce que** chacun parmi le ou les asperseurs (121) est intégré dans un mamelon (112) respectif.

2. Système d'alimentation de liquide (100) selon la revendication 1, dans lequel le système de pulvérisation de liquide (120) comprend en outre :
un capteur de feu configuré pour détecter la présence ou l'absence de feu dans l'étable à bétail ; et
un organe de commande sensible au feu configuré pour commander le ou les asperseurs (121) pour pulvériser le liquide (119) transporté par l'ensemble de tuyauterie (111) en réponse au capteur de feu détectant la présence de feu dans l'étable à bétail.

3. Système d'alimentation de liquide (100) selon l'une quelconque des revendications 1 ou 2, dans lequel le système de pulvérisation de liquide (120) comprend en outre :
un capteur de chaleur configuré pour détecter une température dans l'étable à bétail ; et
un organe de commande sensible à la chaleur configuré pour commander le ou les asperseurs (121) pour pulvériser le liquide (119) transporté par l'ensemble de tuyauterie (111) en réponse au capteur de chaleur détectant une température dépassant un seuil de température prédéterminé.

4. Système d'alimentation de liquide (100) selon l'une quelconque des revendications 1 à 3, dans lequel le système de pulvérisation de liquide (120) comprend en outre :
un capteur de poussière configuré pour mesurer une quantité de poussière dans l'étable à bétail ; et
un organe de commande sensible à la poussière configuré pour commander le ou les asperseurs (121) pour pulvériser le liquide (119) transporté par l'ensemble de tuyauterie (111) en réponse au capteur de poussière détectant une quantité de poussière dépassant un seuil de poussière prédéterminé.

5. Système d'alimentation de liquide (100) selon l'une quelconque des revendications 1 à 4, dans lequel chacun parmi le ou les asperseurs (900) comprend :
un premier mécanisme de libération de liquide (920) conçu pour libérer une première quantité de liquide à partir de l'ensemble de tuyauterie en réponse à une interaction avec du bétail, de sorte que chaque asperseur est capable de jouer le rôle de mamelon ; et
un second mécanisme de libération de liquide (930, 1030) configuré pour pulvériser de manière commandée du liquide à partir de l'ensemble de tuyauterie (111).

6. Système d'alimentation de liquide (100) selon la revendication 5, dans lequel le second mécanisme de libération de liquide (930) de chaque asperseur est conçu pour pulvériser du liquide à partir de l'ensemble de tuyauterie (111) en réponse à la pression de liquide dans l'ensemble de tuyauterie dépassant un premier seuil de pression prédéterminé.

7. Système d'alimentation de liquide (100) selon la revendication 5 ou 6, dans lequel le second mécanisme de libération de liquide (930) comprend une vanne montée sur ressort (931).

8. Système d'alimentation de liquide (100) selon la revendication 5, dans lequel le second mécanisme de libération de liquide (930) comprend une vanne motorisée sensible à des communications avec un organe de commande.

9. Système d'alimentation de liquide (100) selon l'une quelconque des revendications 1 à 8, dans lequel l'ensemble de tuyauterie (111) est constitué d'un tuyau unique ou d'une pluralité de tuyaux raccordés en série.

10. Agencement d'alimentation de liquide (1100) comprenant une pluralité de systèmes d'alimentation de liquide (100) selon l'une quelconque des revendications 1 à 9, dans lequel l'ensemble de tuyauterie (111) de chaque système d'alimentation est conçu pour prélever du liquide en provenance d'une même alimentation de liquide (1110).

11. Agencement d'alimentation de liquide (1100) selon la revendication 10, comprenant en outre :
un ou plusieurs générateurs de stimulation de bétail (1221, 1222, 1223, 1224) configurés pour générer une stimulation de bétail destinée à encourager le déplacement de bétail au sein du voisinage du générateur de stimulation de bétail ; et
un organe de commande de bétail (1210) configuré pour encourager un déplacement du bétail dans l'étable à bétail en direction d'une ou plusieurs zones souhaitées et/ou à l'écart d'une ou plusieurs zones indésirables de l'étable à bétail (1290) en commandant le fonctionnement du ou des générateurs de stimulation de bétail.

12. Agencement d'alimentation de liquide (1100) selon la revendication 11 dans lequel le ou les générateurs de stimulation de bétail (1221, 1222, 1223, 1224) comprennent un ou plusieurs asperseurs (121) de l'agencement d'alimentation de liquide et/ou un ou plusieurs systèmes de sortie de lumière et/ou un ou plusieurs systèmes de sortie de son et/ou un ou plusieurs systèmes de sortie d'odeur.

13. Agencement d'alimentation de liquide (1100) selon la revendication 11 ou 12, dans lequel la ou les zones indésirables comprennent une zone de l'étable à bétail (1290) susceptible de contenir un feu.

14. Agencement d'alimentation de liquide (1100) selon les revendications 12 ou 13, le système de sortie de lumière comprenant une ou plusieurs sources de lumière et dans lequel le système de sortie de lumière est configuré pour commander l'intensité d'une ou plusieurs sources de lumière pour encourager le déplacement du bétail dans l'étable à bétail.

15. Agencement d'alimentation de liquide (1100) selon la revendication 14, le système de sortie de lumière comprenant au moins deux sources de lumière configurées pour générer de la lumière avec une distribution de puissance spectrale différente et dans lequel le système de sortie de lumière est configuré en outre pour commander l'intensité des au moins deux sources de lumière pour encourager le déplacement du bétail dans l'étable à bétail.
